Europäisches Patentamt

European Patent Office

Office européen des brevets

(11) Numéro de publication: **0 007 884**

**A1**

(12) # DEMANDE DE BREVET EUROPEEN

(21) Numéro de dépôt: **79420035.2**

(22) Date de dépôt: **27.07.79**

(51) Int. Cl.³: **C 22 B 9/02**
**C 22 B 9/10, C 22 B 21/06**
**C 22 B 26/22**

(30) Priorité: **31.07.78 FR 7823197**

(43) Date de publication de la demande:
**06.02.80 Bulletin 80/3**

(84) Etats Contractants Désignés:
**AT DE GB NL SE**

(71) Demandeur: **SOCIETE DE VENTE DE L'ALUMINIUM PECHINEY**
**23 bis, rue Balzac**
**F-75008 Paris(FR)**

(72) Inventeur: **Guerit, Pierre**
**8 Boulevard du Théâtre**
**F-73003 Chambery(FR)**

(72) Inventeur: **Hicter, Jean-Marie**
**Rue des Pervenches**
**F-Coublevie 38500 Voiron(FR)**

(74) Mandataire: **Pascaud, Claude et al,**
**PECHINEY UGINE KUHLMANN 28, rue de Bonnel**
**F-69433 Lyon Cedex 3(FR)**

(54) **Procédé et dispositif de traitement d'un métal ou alliage liquide au moyen de flux liquide ou solide, application au traitement de l'aluminium, du magnésium ou de leurs alliages respectifs.**

(57) L'invention se rapporte à la fonderie des alliages légers. Elle concerne un procédé et un dispositif de traitement d'un métal ou alliage liquide au moyen de flux liquide et solide.

Elle consiste à faire passer le métal ou alliage à traiter au travers d'une colonne munie d'un siphon de sortie garnie de granulés solides et de flux liquide, une partie au moins des granulés étant constitués par un flux solide dont le point de fusion est supérieur à celui du flux liquide et à la température du métal à traiter. Le granulé solide peut être introduit dans une cartouche amovible, facilement interchangeable.

Application à la purification poussée des alliages à base d'aluminium par élimination des inclusions dites ultimes.

FIG 2

EP 0 007 884 A1

-1-

## PROCEDE ET DISPOSITIF DE TRAITEMENT D'UN METAL OU ALLIAGE LIQUIDE AU MOYEN DE FLUX LIQUIDE OU SOLIDE

La présente invention concerne un procédé et un dispositif de traitement d'un métal ou alliage liquide par passage à travers un lit complexe formé de granulés de flux solide immergés dans un bain de flux liquide. Elle s'applique particulièrement à la fonderie des métaux et alliages légers, et en particulier de l'aluminium et de ses alliages, du magnésium et de ses alliages et de quelques autres métaux dont les points de fusion peu élevés sont compatibles avec l'utilisation des flux usuels à base d'halogénures métalliques, tels que le plomb, l'étain ou le zinc.

Dans tout ce qui suit, nous désignerons par le mot "traitement" l'ensemble des opérations que subit un métal ou alliage liquide brut de fusion avant son utilisation en fonderie, en vue d'en éliminer les impuretés, et en particulier les inclusions qui altéreraient les propriétés des produits coulés. Ces opérations peuvent être de nature purement physique, telle que la filtration, ou physico-chimique, telle que la mise en contact avec des flux.

Tant dans la fonderie de pièces que dans la coulée semi-continue de plaques, billettes ou lingots et dans la coulée continue, on a reconnu la nécessité, pour obtenir des pièces saines, exemptes de défauts, de filtrer le métal.

Dans la pratique, on a combiné la filtration mécanique avec un "lavage" au moyen d'un flux constitué le plus souvent par un ou plusieurs halogénures de métaux alcalins et alcalinoterreux fondus qui facilite le "mouillage" des inclusions et leur rassemblement sous forme de crasses.

Les inclusions non mouillées par le métal et mouillées par les flux parvenant à une interface métal liquide-flux liquide ainsi créé sont piégées à cet interface et pénètrent dans le flux liquide. Elles sont extirpées du métal liquide au cours de ce "lavage".

Pour une quantité de métal liquide à traiter et une quantité de flux donnée, le traitement effectué est d'autant plus efficace que la surface interfaciale métal liquide - flux liquide, est plus développée (dispersion fine ou émulsion) et que le brassage des liquides est

-2-

important du fait du renouvellement des liquides au voisinage de l'interface

De nombreux brevets décrivent des procédés et des dispositifs permettant à la fois le lavage du métal par un flux et sa filtration au travers de masses poreuses.

On peut citer notamment les brevets des Etats-Unis : 2.863.558, 3.006.473, 3.010.712, 3.025.155, 3.039.864, 3.172.757, 3.821.238, 3.737.305 au nom d'ALCOA ; les brevets anglais 1.266.500 et français 2.061.246 au nom de BACO (BRITISH ALUMINIUM CO) ; les brevets français 1.254.899 et 1.258.674 et anglais 1.148.344 de FOSECO ; américain 3.227.547 d'UNION CARBIDE.

Tous prévoient différentes dispositions pour faciliter la mise en contact du métal et du flux liquide, pour éviter l'entraînement des crasses vers la goulotte de coulée et pour faire passer le métal au travers de masses solides filtrantes. Nous n'avons pas retenu, au titre de l'art antérieur, les brevets dans lesquels un gaz, quelquefois chloré, est injecté dans le métal liquide.

Les différents procédés énumérés ci-dessus consistent soit à effectuer une filtration physique simple, soit à effectuer une dispersion de flux dans le métal liquide et à procéder à une agitation par des moyens mécaniques ou par un barbottage de gaz inerte ou actif. Ces procédés ont été considérés comme satisfaisants pendant de nombreuses années. Mais, à l'heure actuelle, les exigences de la construction aéronautique, des bandes minces pour boîtages, des feuilles minces, des fils fins, obligent les producteurs de demi-produits en métaux et en alliages légers, à améliorer sans cesse la qualité, d'autant plus que l'affinage des méthodes analytiques a montré que des inclusions microscopiques, tenues jusqu'alors pour négligeables, pouvaient altérer certaines caractéristiques mécaniques et augmenter les taux de rebuts, et, parfois, rendre inopérants, voire nocifs, certains traitements thermiques poussés, pratiqués au voisinage du point de fusion des constituants eutectiques des alliages.

La présente invention permet d'obtenir un niveau de propreté du métal nettement supérieur aux procédés connus.

Elle concerne, en premier lieu, un procédé de traitement d'un métal liquide au moyen de flux à base d'halogénures métalliques, consistant à introduire le métal au sommet d'une colonne garnie d'un lit complexe formé de granulés solides immergés dans un flux liquide, une partie au moins des granulés étant constitués par du flux solide. Le flux solide et le flux liquide sont constitués par un ou plusieurs halogénures de sodium, potassium, lithium, calcium, baryum, magnésium, aluminium, le point de fusion du flux solide étant supérieur à la température de fusion du flux liquide et à la température du métal à traiter.

De façon à faciliter un renouvellement rapide du flux solide, on peut le placer dans une cartouche amovible qui vient s'insérer dans la colonne.

Elle concerne, en second lieu, un dispositif pour la mise en oeuvre du procédé ci-dessus, comportant une colonne munie, à sa partie supérieure d'un dispositif d'introduction du métal liquide, et, à sa partie inférieure, d'un siphon d'extraction du métal traité dont l'orifice supérieur présente, par rapport au dispositif d'introduction du métal, une différence de niveau au moins égale à la perte de charge que subit le métal liquide dans la traversée de la colonne. En outre, la section du siphon de sortie est, de préférence, inférieure à la section de la colonne.

Le dispositif peut comporter également une cartouche amovible, interchangeable, qui s'insère dans la colonne, et dont le fond est perforé et peut aussi comporter un moyen d'obturation.

Il peut également comporter un moyen d'introduire le métal liquide à l'abri de l'air, ou sous couverture de gaz inerte.

Un des éléments essentiels de l'invention est l'association d'un flux liquide et d'un flux solide granulé pour former le lit complexe de traitement.

Le flux liquide est composé d'un ou plusieurs halogénures - et essentiellement de chlorures et/ou de fluorures - de métaux alcalins et/ou alcalino-terreux, ainsi que de magnésium et/ou d'aluminium, et/ou de sels complexes tels que la cryolithe lithique, sodique ou potassique.

Le granulé solide peut être constitué, en totalité ou en partie seulement, par du flux solide. Dans ce cas, il a une composition chimique analogue, mais son point de fusion doit être supérieur à la température de fusion du flux liquide et à la température du métal à traiter.

-4-

Sa densité peut être égale, inférieure ou supérieure à celle du flux liquide, les granulés ayant tendance à se rassembler vers le haut ou vers le bas du récipient de traitement sans que l'efficacité du traitement s'en trouve affectée. On introduit, à l'origine, une quantité de granulés telle qu'ils remplissent la quasi totalité de la colonne, le flux liquide venant alors se loger dans l'intervalle. Les granulés peuvent être des sphères obtenues par les techniques classiques, telles que bouletage, avec des diamètres pouvant aller de 2 à 15 mm environ, ou des granulés de forme et dimensions variées obtenues par tous moyens d'agglomération connus.

On peut, en particulier, obtenir des formes irrégulières, anguleuses, par concassage de granulés sphériques. Ces granulés peuvent être massifs ou poreux. Dans ce dernier cas, on peut introduire, lors de leur moulage, un additif qui sera ensuite éliminé par évaporation ou dissolution sélective. Des formes très diverses peuvent être obtenues par pastillage, extrusion d'une pâte, compactage, par exemple dans une presse à boulets. Il est également possible qu'une partie du granulé solide soit constitué par une matière inerte, vis-à-vis du métal à traiter et des constituants du flux : par exemple de l'alumine, du carbure de silicium, de l'oxynitrure de silicium, du carbone ou différents réfractaires alumineux, silico-alumineux, ou autres matériaux stables vis-à-vis du métal liquide. Ces granulés inertes jouent alors uniquement le rôle de dispersants du métal liquide, de façon à multiplier les surfaces de contact entre métal liquide d'une part, et constituants du flux - solide et liquide - d'autre part.

De même, un granulé solide peut être constitué par un noyau inerte enrobé de flux solide actif ; toutes les dispositions qui viennent d'être décrites, de façon non limitative, ayant pour but d'offrir une surface de contact aussi grande que possible avec le métal à traiter.

En résumé, il est possible dans ce procédé, d'utiliser quatre types de grains :

- des grains actifs, homogènes et utilisés seuls,
- des grains activés, utilisés seuls,
- des grains mixtes, c'est-à-dire des grains dont la composition peut comporter des éléments actifs et des éléments inertes et qui seraient utilisés seuls,
- des grains inertes, toujours utilisés en mélange avec des grains

-5-

actifs.

Les compositions chimiques du flux solide et du flux liquide doivent être compatibles, de façon que la durée de vie des granulés de flux solide, au sein du flux liquide soit au moins égale à la durée du traitement du métal.

Les compositions qui suivent ont donné entière satisfaction, tant au point de vue activité qu'au point de vue durée de vie. Elles sont données à titre d'exemple non limitatif, en pourcentage pondéral :

| | A | B | C | D | E |
|---|---|---|---|---|---|
| flux solide | $AlF_3$ 45%<br>$CaF_2$ 55% | $AlF_3$ 45%<br>$MgF_2$ 55% | $CaF_2$ 50%<br>$MgF_2$ 50% | $AlF_3$ 41%<br>$CaF_2$ 59% | $AlF_3$ 55%<br>$MgF_2$ 45% |
| flux liquide | NaCl 50%<br>KCl 45%<br>$CaF_2$ 5% | $MgCl_2$ 40%<br>KCl 40%<br>$K_3AlF_6$ 20% | $MgCl_2$ 50%<br>KCl 30%<br>$CaF_2$ 10%<br>$MgF_2$ 10% | KCl 30%<br>NaCl 50%<br>$CaF_2$ 10%<br>$AlF_3$ 10% | $MgCl_2$ 50%<br>KCl 30%<br>$AlF_3$ 10%<br>$MgF_2$ 10% |

Les figures et l'exemple de réalisation qui suivent vont permettre de préciser les modalités de mise en oeuvre de l'invention.

La figure 1 représente une colonne de traitement avant fonctionnement garnie de granulés de flux solide, dans laquelle on a introduit d'abord du métal liquide puis du flux liquide de façon à amorcer le siphon.

La figure 2 représente une colonne de traitement en régime de fonctionnement, placée entre la sortie du four de fusion et l'entrée d'une installation de coulée.

La figure 3 représente un dispositif de cartouche amovible permettant un renouvellement rapide des granulés.

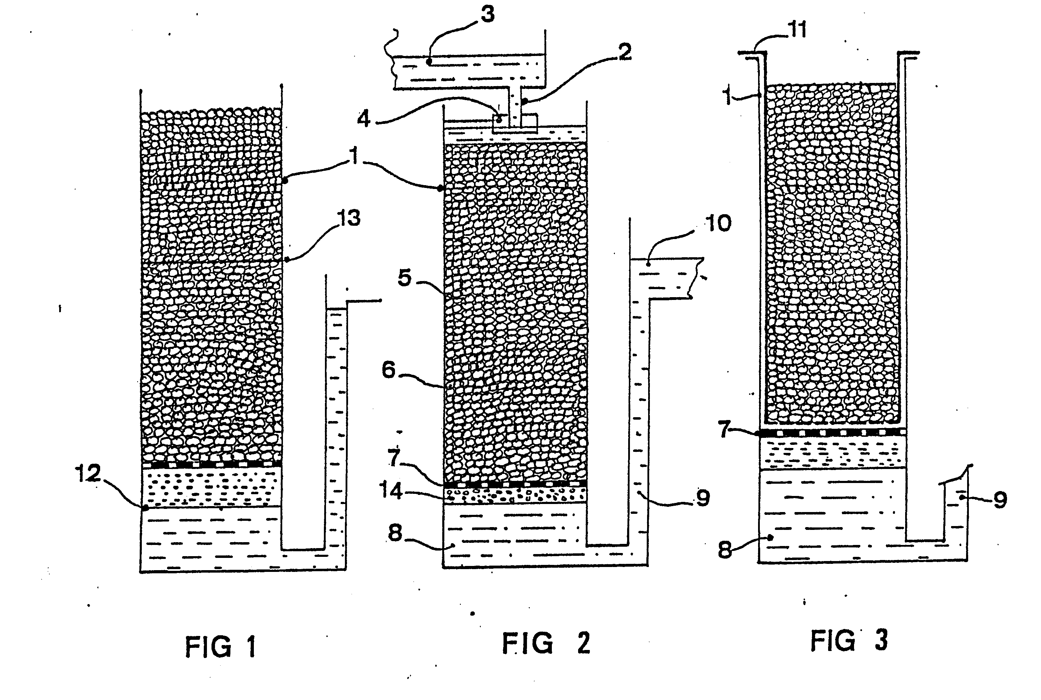

En fonctionnement (figure 2), la colonne de traitement (1), reçoit à sa partie supérieure par la busette (2) le métal à traiter (3) qui se répartit sur toute la section utile de la colonne (1). Un flotteur (4) ou tout autre dispositif analogue, assure le contrôle de l'arrivée et par là le niveau de métal à traiter.

A ce niveau, il est possible de prévoir tout dispositif connu permettant d'introduire le métal liquide à l'abri de l'air, ou sous couverture de gaz inerte.

-6-

A partir du sommet de la colonne, le métal s'écoule par gravité à travers le flux liquide (5) en se dispersant en une multitude de gouttelettes sur le garnissage solide (6).

Cette dispersion étant un des éléments essentiels de l'invention, il est possible de l'améliorer par différentes dispositions, par exemple, en élargissant le diamètre du flotteur (4) jusqu'à une dimension sensiblement égale au diamètre de la colonne (1), et en pratiquant, à sa partie inférieure, un grand nombre de trous de petit diamètre de façon telle que l'alimentation en métal liquide à traiter s'effectue de façon à peu près homogène sur toute la surface d'entrée de la colonne. On évite ainsi toute tendance au "renardage", c'est-à-dire au phénomène par lequel le métal traverserait la colonne, du haut en bas, par un petit nombre de trajets préférentiels laissant de côté d'importantes zones mortes et diminuant ainsi l'efficacité du traitement.

A la partie inférieure de la colonne (1), une grille (7) arrête les granulés et laisse passer les gouttelettes de métal qui se rassemblent en (8) et coalescent, alimentant ainsi en continu le siphon (9) par lequel est soutiré le métal traité pour être dirigé vers l'installation de coulée (10).

Sous l'action combinée de l'agitation, du contact avec les filets de métal, des réactions chimiques et de leur fusion ou mise en solution progressive dans le flux liquide, les granulés tendent à se consommer et à s'user. On pourrait périodiquement en rajouter. Mais, il est particulièrement avantageux que les granulés soient introduits dans une cartouche amovible (11), facilement interchangeable.

Il suffit alors, pendant qu'un traitement est en cours, de tenir une ou plusieurs cartouches de rechange en réserve, à la température voulue et de procéder à l'échange à des intervalles de temps prédéterminés ou après passage d'une quantité de métal prédéterminée. Le flux liquide peut être soutiré en vue de son renouvellement par différents moyens, par exemple au moyen d'un orifice disposé à la partie inférieure de la colonne.

Il serait également possible de munir le fond de la colonne d'un tube perforé permettant l'injection d'un gaz de traitement neutre (azote, argon) ou actif (gaz chloré) selon les besoins. Outre l'action chimique éventuelle du gaz, il en résulterait une agitation supplémentaire des granulés au sein du flux liquide. Mais, en pratique,

-7-

cette disposition n'apparaît pas indispensable.

EXEMPLE :

On a réalisé une colonne de traitement pour l'aluminium et ses alliages ayant un diamètre de 70 cm et une hauteur de 120 cm. La sortie du siphon est à 250 mm au-dessous du niveau d'entrée du métal liquide. Le garnissage du flux solide occupe sensiblement 60 % du volume total.

Au démarrage, on introduit du métal liquide sur une hauteur de 10 cm environ jusqu'au niveau (12) puis du flux liquide sur une hauteur de 60 cm environ, jusqu'au niveau (13) pour amorcer le siphon. La colonne est alors prête à fonctionner, et on introduit l'aluminium liquide à traiter (3) provenant du four de fusion. Le niveau de la dispersion métal liquide − flux liquide, atteint environ 100 cm et est stabilisé par la régulation de l'alimentation assurée par l'ensemble busette-flotteur. La zone de coalescence du métal est au niveau (14). On équilibre ainsi en continu le débit d'arrivée du métal à traiter et le débit d'extraction par le siphon du métal traité.

Cette colonne assure un débit de métal pouvant aller jusqu'à 30 tonnes par heure pour de l'aluminium, sans que ce débit apparaisse comme une limite due à la géométrie de la colonne ou à la vitesse de passage du métal dans la colonne. La seule limitation est due à la différence de niveau entre l'entrée et la sortie du métal qui est le plus souvent imposée, en exploitation industrielle, par le positionnement du four de fusion et de l'installation de coulée.

La section du siphon de sortie (9) est faible par rapport à celle de la colonne (1), de telle sorte qu'une faible variation du niveau liquide dans la colonne correspond à une variation plus importante du niveau de sortie du métal, ce qui facilite la stabilisation du débit de métal en régime permanent. On a ainsi traité, à titre d'exemple, des alliages des types 7075 (base aluminium, zinc, magnésium, cuivre) et 2014 (base aluminium, cuivre, silicium, magnésium), pour application aéronautique, et 5052 (base aluminium, magnésium, manganèse) pour boîtes de conserves alimentaires.

La teneur en inclusions du métal traité a été évaluée par mesure de la concentration résiduelle en oxygène. Dans tous les cas, la teneur en oxygène trouvée n'est pas significativement différente de la limite de détection de la méthode utilisée (dosage par activation aux neutrons) qui est de 0,5 ppm tandis que les teneurs initiales des

-8-

alliages avant traitement variaient entre 4 et 10ppm.

Indépendamment de la teneur globale en oxygène, il faut également considérer le nombre et la taille des inclusions. En effet, une très faible teneur en oxygène pourrait correspondre à un très petit nombre d'inclusions de dimensions importantes dont l'effet, sur les caractéristiques du métal, pourrait être désastreux. Il apparaît que la mise en oeuvre de l'invention assure l'élimination de toutes les inclusions, quelle que soit leur taille, et même de ce qu'il est convenu d'appeler les inclusions "ultimes".

En outre, le système de cartouche interchangeable permet de travailler de façon parfaitement continue. Il suffit de disposer dans la poche de fonderie deux cartouches filtrantes utilisées simultanément; lorsque la première est hors d'usage, par saturation ou colmatage, il suffit de diriger le métal provenant du four de fusion vers la deuxième, pendant qu'on remet la première en état de marche.

Dans le cas de coulée semi-continue, il est préférable de maintenir la colonne de filtration à sa température de travail, dans l'intervalle entre chaque coulée, par un moyen quelconque de chauffage auxiliaire.

La mise en oeuvre de l'invention, telle qu'elle vient d'être décrite, a permis de réduire très sensiblement la teneur en inclusions, mais, en outre, elle a entraîné une diminution importante des taux de rebuts sur tous les produits obtenus à partir des métaux et alliages ainsi traités.

-9-

REVENDICATIONS DE BREVET

1. Procédé de traitement d'un métal liquide au moyen de flux à base d'halogénures métalliques, caractérisé en ce que le métal est introduit au sommet d'une colonne garnie d'un lit complexe formé de granulés solides immergés dans un flux liquide, une partie au moins des granulés étant constitués par du flux solide, et ayant un point de fusion supérieur à la température de fusion du flux liquide et à la température du métal à traiter.

2. Procédé de traitement d'un métal liquide selon revendication 1, caractérisé en ce que le flux solide est constitué par au moins un halogénure d'un métal appartenant au groupe comprenant le sodium, le lithium, le calcium, le baryum, le magnésium, l'aluminium et le potassium.

3. Procédé de traitement d'un métal liquide selon revendication 1, caractérisé en ce que le flux liquide est constitué par au moins un halogénure d'un métal appartenant au groupe comprenant le sodium, le potassium, le lithium, le calcium, le baryum, le magnésium et l'aluminium.

4. Procédé de traitement d'un métal liquide selon l'une quelconque des revendications 1 à 3, caractérisé en ce que le flux solide est placé dans une cartouche amovible, interchangeable.

5. Procédé de traitement d'un métal liquide selon l'une quelconque des revendications 1 à 4, caractérisé en ce que le métal liquide est introduit dans la colonne à l'abri de l'air.

6. Procédé de traitement d'un métal liquide selon l'une quelconque des revendications 1 à 4, caractérisé en ce que le métal liquide est introduit dans la colonne sous couverture de gaz inerte.

7. Dispositif de traitement d'un métal liquide au moyen de flux à base d'halogénures métalliques selon le procédé objet de l'une quelconque des revendications 1 à 6, caractérisé en ce qu'il comporte une colonne munie, à sa partie supérieure, d'un moyen d'introduction du métal liquide et, à sa partie inférieure, d'un siphon d'extraction dont l'orifice supérieur présente par rapport au dispositif d'introduction du métal liquide, une différence de niveau au moins égale à la perte de charge que subit le métal liquide dans la traversée de la colonne.

8. Dispositif de traitement d'un métal liquide selon revendication 7, caractérisé en ce que la section du siphon de sortie est inférieure à celle de la colonne.

9. Dispositif de traitement d'un métal liquide selon revendication 7 ou 8, caractérisé en ce qu'il comporte une cartouche amovible interchangeable qui s'insère dans la colonne.

10. Dispositif de traitement d'un métal liquide selon revendication 9, caractérisé en ce que la partie inférieure de la cartouche possède un moyen d'obturation.

11. Dispositif de traitement d'un métal liquide selon l'une quelconque des revendications 7 à 10, caractérisé en ce qu'il comporte, au sommet de la colonne, un dispositif de contrôle de l'arrivée du métal liquide.

12. Dispositif de traitement d'un métal liquide, selon l'une quelconque des revendications 7 à 11, caractérisé en ce que le moyen d'introduction du métal liquide comporte de nombreux trous de petit diamètre.

13. Dispositif de traitement d'un métal liquide selon l'une quelconque des revendications 7 à 12, caractérisé en ce qu'il comporte un moyen pour introduire le métal liquide dans la colonne à l'abri de l'air

14. Dispositif de traitement d'un métal liquide selon l'une quelconque des revendications 7 à 13, caractérisé en ce qu'il comporte un moyen pour introduire le métal liquide dans la colonne sous couverture de gaz inerte.

15. Application du procédé et du dispositif selon l'une quelconque

-11-

des revendications précédentes, au traitement de l'aluminium et
des alliages à base d'aluminium, du magnésium, et des alliages à
base de magnésium.

FIG 1    FIG 2    FIG 3

**Office européen des brevets** | **RAPPORT DE RECHERCHE EUROPEENNE**

Numéro de la demande

EP 79 42 0035

| Catégorie | Citation du document avec indication, en cas de besoin, des parties pertinentes | Revendication concernée |
|---|---|---|
| | **DOCUMENTS CONSIDERES COMME PERTINENTS** | |
| | FR - A - 2 375 329 (ALUMINIUM SUISSE) <br><br> * Revendications 1 à 3, 11 * <br><br> -- | 1,3,7 |
| | PUBLICATION DERWENT JAPANESE PATENTS REPORT, vol. 74, no. 30, août 1974 <br> London, England <br> & JP - A - 74 027 921 (K. KOKISO) <br> * En entier * <br><br> -- | 1 |
| A | FR - A - 1 186 345 (FOUNDRY SERVICES LTD.) | |
| A | FR - A - 2 086 293 BASF) | |
| A | FR - A - 2 122 300 (AIR LIQUIDE) | |
| A | US - A - 3 305 351 (L.D. BYLUND) | |
| A | US - A - 3 528 801 (L.D. BYLUND) | |
| | ---- | |

**CLASSEMENT DE LA DEMANDE (Int. Cl. 3)**

C 22 B  9/02
       9/10
     21/06
     26/22

**DOMAINES TECHNIQUES RECHERCHES (Int. Cl. 3)**

C 22 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 01-11-1979 | JACOBS |

OEB Form 1503.1  06.78